# EUROPEAN PATENT APPLICATION

(11) **EP 4 328 743 A1**
(43) Date of publication of application: **28.02.2024**
(21) Application number: 22795001.1
(22) Date of filing: 28.04.2022
(51) Int. Cl.: G06F 9/30

(54) **INSTRUCTION BLOCK PROCESSING METHOD, APPARATUS AND DEVICE, VEHICLE, AND STORAGE MEDIUM**

(30) Priority: 29.04.2021 CN 202110488954; 29.04.2021 CN 202110478811
(71) Applicant: Human Horizons (Shanghai) Cloud Computing Technology Co., Ltd., Shanghai 201100 (CN)
(72) Inventor: HUANG, Tianjian, Shanghai 201100 (CN); XU, Chao, Shanghai 201100 (CN)
(74) Representative: Meyer, Thorsten
(86) International application number: PCT/CN2022/089980
(87) International publication number: WO 2022/228531

(57) **Abstract**

The present invention discloses a method, an apparatus, a device, a vehicle, and a storage medium for processing an instruction block. The method includes: receiving, by a vehicle-mounted control system, a user-set trigger condition for translating an instruction block; translating, by the vehicle-mounted control system, a user-selected instruction block into a corresponding instruction set according to an instruction parameter of the selected instruction block if the trigger condition for translating an instruction block is met; interpreting, by the vehicle-mounted control system, the instruction set to obtain a corresponding vehicle control instruction. By configuring a strategy for processing instruction blocks, the method, apparatus, device, vehicle, and storage medium provided in the embodiments of the present invention improve the entire process of instruction signal processing from the user to the vehicle, meeting different user instruction requirements, enhancing the user experience, and advancing the intelligence level of vehicle control.

## Description

### FIELD OF THE INVENTION

The present invention relates to the field of vehicle technologies, particularly to a method, an apparatus, a device, a vehicle and a storage medium for processing an instruction block.

### BACKGROUND OF THE INVENTION

Currently, the control instructions for vehicles are all preset by developers and stored in the vehicle. Users can only choose a preset single instruction to control the vehicle. However, in different environmental conditions, users often need to select the operational instructions that are different from the preset instructions according to different actual needs. The vehicle, however, cannot process personalized operational instructions according to user requirements, leading to challenges in achieving accurate and effective personalized vehicle control.

### SUMMARY OF THE INVENTION

The present invention provides a method, an apparatus, a device, a vehicle and a storage medium for processing an instruction block. By configuring the method for processing an instruction block, the deficiencies of the prior art can be effectively addressed, guaranteeing the accuracy and effectiveness of personalized vehicle control.

To address the above technical problem, in a first aspect, an embodiment of the present invention provides a method for processing an instruction block, the method includes:
receiving, by a vehicle-mounted control system, a user-set trigger condition for translating an instruction block;
translating, by the vehicle-mounted control system, a user-selected instruction block into a corresponding instruction set according to an instruction parameter of the selected instruction block if the trigger condition for translating an instruction block is met;
interpreting, by the vehicle-mounted control system, the instruction set to obtain a corresponding vehicle control instruction.

As one of the preferred solutions, after the process of translating a user-selected instruction block into a corresponding instruction set according to an instruction parameter of the selected instruction block, the method further includes:
sending, by the vehicle-mounted control system, the instruction set to a cloud server for the cloud server to verify a content of the instruction set, wherein the content of the instruction set includes at least an instruction set protocol and an instruction set permission.

As one of the preferred solutions, the trigger condition for translating an instruction block is met when
the vehicle-mounted control system receives a trigger signal from a user terminal.

As one of the preferred solutions, the process of translating a user-selected instruction block into a corresponding instruction set according to an instruction parameter of the selected instruction block, specifically includes:
extracting, by the vehicle-mounted control system, individual instructions from the instruction block;
generating, by the vehicle-mounted control system, corresponding code fragments based on the instruction parameters of each individual instruction;
constructing, by the vehicle-mounted control system, the corresponding instruction set by using the code fragments.

As one of the preferred solutions, after obtaining the corresponding vehicle control instruction, the method also includes:
extracting, by the vehicle-mounted control system, an instruction message from the vehicle control instruction;
parsing the instruction message, and receiving, by the vehicle-mounted control system, a parameter format corresponding to the parsed instruction message;
determining, according to the parameter format, a controlled component of the vehicle corresponding to the parameter format based on a preset reference database correlating parameter formats and controlled components;
controlling, by the vehicle-mounted control system, the controlled component to execute the vehicle control instruction.

As one of the preferred solutions, the number of the user-selected instruction blocks and the number of the vehicle control instructions are equal in quantity and are both at least two, then after the process of interpreting, by the vehicle-mounted control system, the instruction set to obtain a corresponding vehicle control instruction, the method further includes:
extracting separately respective execution dimension parameters corresponding to each user-selected instruction block;
constructing an execution dimension axis corresponding to the respective execution dimension parameters;
sending the vehicle control instructions to each controlled component of the vehicle one by one to make each controlled component of the vehicle execute the vehicle control instructions in a proper order based on the execution dimensional axis.

As one of the preferred solutions, the execution dimension parameter includes at least one of the following: a time dimension parameter and a space dimension parameter;
the execution dimension axis includes at least one of the following: an execution time dimension axis and an execution space dimension axis.

As one of the preferred solutions, the process of constructing an execution dimension axis corresponding to the respective execution dimension parameters, specifically includes:
receiving time point parameters corresponding to each execution dimension parameter;
determining respective execution timings corresponding to each time point parameter;
constructing the execution time dimension axis based on a chronological sequence of each execution timing.

As one of the preferred solutions, the process of constructing an execution dimension axis corresponding to the respective execution dimension parameters, specifically includes:
receiving spatial position parameters corresponding to each execution dimension parameter;
determining respective physical coordinates corresponding to each spatial position parameter;
constructing the execution space dimension axis based on spatial structures of each physical coordinate.

As one of the preferred solutions, the process of concatenating each instruction block, specifically includes:
extracting respective concatenation parameters corresponding to each instruction block;
concatenating each instruction block one by one based on a sequential combination order of the respective concatenation parameters.

As one of the preferred solutions, the process of converting each concatenated instruction block into corresponding vehicle control instructions, specifically includes:
converting each concatenated instruction block based on a preset first conversion relationship to obtain converted vehicle control instructions, wherein the preset first conversion relationship includes:
translating each concatenated instruction block based on a preset translation protocol to obtain the corresponding instruction set;
interpreting the instruction set according to an interpretation protocol of the vehicle to obtain the corresponding vehicle control instructions.

As one of the preferred solutions, after the process of translating each concatenated instruction block based on a preset translation protocol to obtain the corresponding instruction set, the method further includes:
sending the instruction set to a TSP server for the TSP server to verify a content of the instruction set, wherein the content of the instruction set includes at least an instruction set protocol and an instruction set permission.

In a second aspect, an embodiment of the present invention provides an apparatus for processing instruction block, including:
a receiving module, configured to receive a user-set trigger condition for translating an instruction block;
a translation module, configured to translate a user-selected instruction block into a corresponding instruction set according to an instruction parameter of the selected instruction block when the trigger condition for translating an instruction block is met;
an interpreting module, configured to interpret the instruction set to obtain a corresponding vehicle control instruction.

In a third aspect, an embodiment of the present invention provides a terminal device, including a memory, a processor, and a computer program stored in the memory and executable on the processor; when executing the computer program, the processor implements the method for processing an instruction block as described above.

In a fourth aspect, an embodiment of the present invention provides a vehicle, wherein the vehicle includes the terminal device as described above.

In a fifth aspect, an embodiment of the present invention provides a computer-readable storage medium, the computer-readable storage medium stores a computer program, wherein when the computer program runs, a device in which the computer-readable storage medium is located is controlled to perform the method for processing an instruction block as described above.

Compared with the prior art, the beneficial effects of the embodiments of the present invention include at least one of the following points. No need to rely on a preset single instruction block of the system. Users can autonomously select different instruction blocks based on the actual requirements in different environments, meanwhile, users can also autonomously set relevant trigger conditions for the instruction blocks, enhancing the flexibility and expandability of instruction control, reducing the threshold for user programming control. Then, the sequentially performed operations related to translation and interpretation of the instruction blocks ensures that the instruction blocks needed by the user are effectively processed and converted into the vehicle control instructions that are recognizable to the vehicle so as to ensure that the vehicle can accurately process them, thereby achieving the effect of corresponding personalized control. This shows that by configuring a processing strategy for the instruction blocks, the entire process of instruction signal processing from the user to the vehicle is improved, meeting different user instruction requirements, enhancing the user experience, and advancing the intelligence level of vehicle control.

### BRIEF DESCRIPTION OF THE DRAWINGS

FIG.1 is a schematic diagram of a structure of a positioning fixture for a clutch driven plate according to an embodiment of the present invention.
FIG.2 is an explosive view of a positioning fixture for a clutch driven plate according to an embodiment of the present invention.
FIG.3 is a schematic diagram of a structure of a chain plate according to an embodiment of the present invention.

### Reference signs in the drawings:

11 receiving module; 12 translating module; 13 interpreting module; 21 processor; 22 memory.

### DETAILED DESCRIPTION OF THE INVENTION

Now with reference to the drawings in the embodiments of the present invention, the technical solutions of the embodiments of the present invention will be described clearly and comprehensively. Clearly, the described embodiments are only a part of the embodiments of the present invention, not all of the embodiments. These embodiments are provided for the purpose of making the disclosure of the present invention more thorough and comprehensive. Based on the embodiments of the present invention, all other embodiments obtained by those skilled in the art without inventive effort are within the scope of protection of the present invention.

In the description of this application, the terms "first", "second", "third" and the like are used for descriptive purposes only and should not be understood as indicating or implying the relative importance or implying the quantity of the indicated technical features. Thus, features labeled with "first", "second", "third" and the like may explicitly or implicitly include one or more of that feature. In the description of this application, unless otherwise specified, the meaning of "a plurality of" is two or more.

In the description of this application, it should be noted that, unless otherwise explicitly defined or limited, the terms "mount", "connect", "couple" should be broadly interpreted. For example, they may refer to fixed connection, detachable connection, or integral connection; they may refer to mechanical connection or electrical connection; they may refer to direct connection or indirect connection through an intermediate medium, and they may refer to communication within two components. The terms "vertical", "horizontal", "left", "right", "up", "down" and similar expressions used in this application are for illustrative purposes and do not indicate or imply that the apparatus or element referred to must have a specific orientation, or be constructed or operated in a specific orientation, and therefore should not be construed as limiting to the present invention. The term "and/or" used in this application includes any or all combinations of one or more of the relevant listed items. For those skilled in the art, the specific meaning of the above terms in this application can be understood according to the specific situation.

In the description of this application, it should be noted that, unless otherwise defined, all the technical and scientific terms used in the present invention have the same meaning as understood by those skilled in the art. The terms used in the description of the present invention are for the purpose of describing specific embodiments and are not intended to limit the present invention. For those skilled in the art, the specific meaning of the above terms in this application can be understood according to the specific situation.

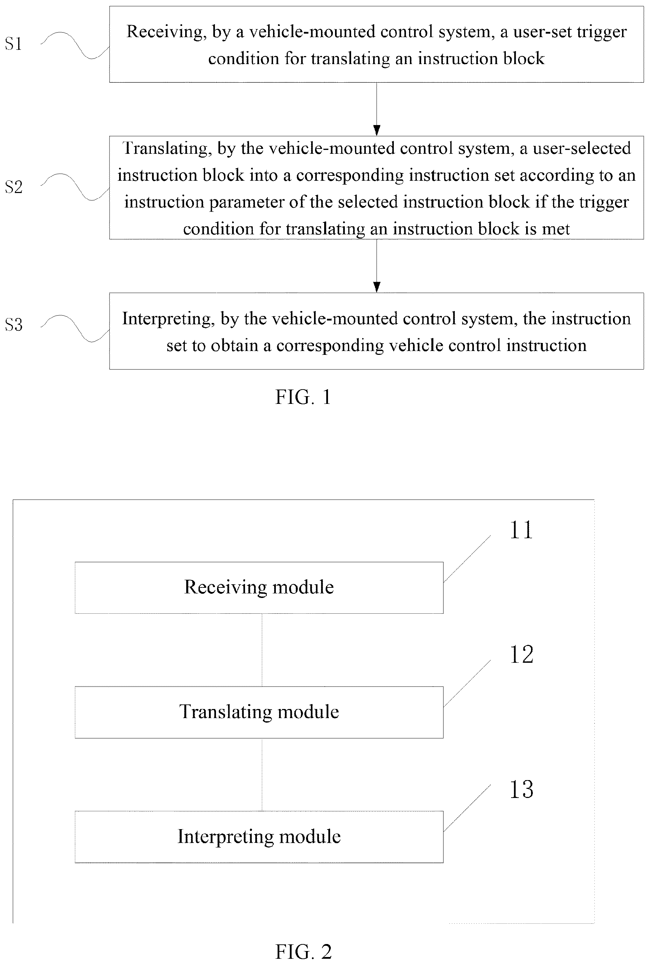

An embodiment of the present invention provides a method for processing an instruction block. For details, please refer to FIG. 1. FIG. 1 illustrates a schematic flowchart of a method for processing an instruction block according to an embodiment of the present invention. The method includes:
S1: receiving, by a vehicle-mounted control system, a user-set trigger condition for translating an instruction block;
S2: translating, by the vehicle-mounted control system, a user-selected instruction block into a corresponding instruction set according to an instruction parameter of the selected instruction block if the trigger condition for translating an instruction block is met;
S3: interpreting, by the vehicle-mounted control system, the instruction set to obtain a corresponding vehicle control instruction.

It should be noted that, in the embodiments of the present invention, the instruction block is an object that may be operated by a user. For example, in user programming, the instruction blocks are designed in the form of building blocks, allowing the user to select, drag, and combine them. Certainly, in addition to building-block-style instruction blocks, other objects, such as pattern-styled objects, may also be used as instruction blocks in the present invention, and details are not described herein.

Since instruction blocks themselves cannot be recognized by the vehicle, in order to achieve the corresponding functions of different instruction blocks, they need to be effectively processed, but existing technology has not involved this aspect of improvement. Typically, existing technology has a certain number of instruction blocks set up in the system for users to call when needed. However, in different environmental conditions, users often do not need the system's preset instruction blocks. Therefore, it is clear that the form of preset instruction blocks in the existing technology reduces user autonomy, resulting in poor flexibility. The present invention is aimed at solving this problem, allowing users to select different instruction blocks autonomously. More importantly, for the user-selected instruction blocks, by effectively processing them, they can be transformed into vehicle-recognizable vehicle instructions, thereby ensuring that the vehicle is under control of accurate vehicle control instructions, and thus meeting the needs of relevant user-personalized control.

In addition, in the embodiments of the present invention, there is a one-to-one correspondence relationship between the relevant instruction blocks and the controlled components of the vehicle, which is used to implement the execution of operational functions of the vehicle. To increase the intelligent level of instruction block control, relevant trigger conditions may also be set. The trigger conditions are also based on the form of instruction blocks and are used to implement conditional judgments. The instruction form based on conditional judgments has a higher intelligent level and can achieve effects like delayed operations, looping operations and the like.

Since the embodiments of the present invention ultimately aim to obtain the vehicle control instructions that are recognizable to the vehicle, for ease of understanding, consider the example where the vehicle control instructions can achieve corresponding adjustment functions of the vehicle, such as speed adjustment, gear adjustment, brake adjustment, vehicle window control, entertainment control, seat control, and so on. Therefore, as a preferred example, to establish a correspondence between the vehicle control instructions and the instruction blocks, during the process of associating, firstly modularize the controlled component of the vehicle and associate it with the instruction block. Then, further associate the controlled component's status with the instruction block's functional parameter. After the association, perform a test, if the test result does not meet expectations, redesign is required; if the test result meets expectations, stores the instruction block into an instruction block database. As an example, a driver's seat of a vehicle is modularized as module 1 and a movement of the module 1 is defined, where the movement of the seat in forward, backward, left, right, up or down direction may be considered as a motion with respect to a fixed point, so a transformation matrix may be established to associate the positions before and after the movement.

Furthermore, in the above embodiments, after the process of translating a user-selected instruction block into a corresponding instruction set according to an instruction parameter of the selected instruction block, the method further includes:
sending the instruction set to a cloud server for the cloud server to verify a content of the instruction set, wherein the content of the instruction set includes at least an instruction set protocol and an instruction set permission.

The cloud server utilizes big data technology and a built-in verification mechanism to verify the instruction set, so as to ensure that during processing and converting the user-selected instruction block, the content of the instruction block will not be tampered with, guaranteeing the accuracy and effectiveness of the content of the instruction block. Certainly, to achieve this effect, the converted instruction set protocol and instruction set permission need to be verified. The principles for verification can refer to existing technology. For example, the server calculates the addresses of the instructions in all code segments of the instruction set and then converts the addresses of the instructions into address verification data based on a conversion protocol corresponding to the instruction set. The server receives the target address data for each code segment through a built-in database or big data technology, and compares and analyzes the data with the converted address verification data to obtain the corresponding verification results. The verification process for instruction set permission may also refer to the above process. This shows that by having the server verify the instruction set, the accuracy and effectiveness of the data of instruction set can be guaranteed and abnormal or faulty instruction sets can be promptly detected, thereby guaranteeing the effectiveness of the subsequent vehicle control instructions.

Furthermore, in the above embodiments, the trigger condition for translating an instruction block is met when a trigger signal from a user terminal is received.

It should be noted that, in the embodiments of the present invention, the subject that executes the various methods is the vehicle-mounted control system of a vehicle terminal. It's the vehicle terminal that implements the processing of the instruction blocks (which may also be done through a simulation system within the vehicle-mounted control system of the vehicle terminal). To increase the intelligent level of instruction control, as mentioned above, relevant trigger conditions for translating an instruction block may be set. The vehicle terminal processes the instruction block when the trigger condition is met. Preferably, the trigger condition for translating an instruction block may specifically be: whenever a temperature inside the vehicle exceeds a preset threshold, whenever the vehicle's gear sensor detects that the vehicle is in "Drive" mode, or whenever the vehicle's speed sensor detects an actual speed exceeding another preset threshold. Under these trigger conditions, a corresponding trigger signal will be generated, which will then be received by the vehicle terminal. Certainly, the trigger signal may also be generated by a user terminal. The user terminal may be a smartphone, tablet, or a related portable operating device that is associated with the vehicle terminal. When a user operates the user terminal, a corresponding trigger signal is generated according to a confirmation instruction inputted by the user, the trigger signal is then sent to the vehicle terminal, thereby increasing the flexibility and expandability of instruction control.

In the above-mentioned embodiment, the vehicle terminal may be a T-box, C-box, IDCM, or a vehicle body domain controller, and the like. These related control terminals have high data processing capabilities and can correspondingly issue corresponding control signals, ensuring that the user-selected instruction blocks are effectively processed to generate effective vehicle control instructions that are recognizable to the vehicle.

Furthermore, in the above embodiments, the process of translating a user-selected instruction block into a corresponding instruction set according to an instruction parameter of the selected instruction block, specifically includes:
extracting, by the vehicle-mounted control system, individual instructions from the instruction block;
generating, by the vehicle-mounted control system, corresponding code fragments based on the instruction parameters of each individual instruction;
constructing, by the vehicle-mounted control system, the corresponding instruction set by using the code fragments.

It should be noted that concerning the translation function for instruction blocks, existing technology has been involved. In this embodiment, the translation of instruction blocks is preferably implemented through an instruction translator within the vehicle terminal. The instruction translator includes: a coder, able to provide a plurality of to-be-translated code generation fragments (which serve as carriers); a branch encoder, configured to encode the to-be-translated code generation fragments for multiple threads to generate subsequent translated instruction set; and a translation rule, configured to accept a corresponding translation protocol according to a property of the code. In addition, the translation function for instruction blocks may also be implemented as follows: during the translation of instruction blocks, first, receive the parameters of the instruction blocks, and process based on an editing mode indicated in the parameters; if it is a default mode, take out each instruction block one by one in a sequential combination order of the instruction blocks, and translate each instruction block into a corresponding instruction set fragment respectively, and then sequentially concatenate all the instruction set fragments in the sequential combination order to obtain a complete instruction set. Certainly, other forms of translation function for instruction blocks may also be employed in the present invention, and details are not described herein.

Furthermore, in the above embodiments, after obtaining the corresponding vehicle control instruction, the method further includes:
extracting, by the vehicle-mounted control system, an instruction message from the vehicle control instruction;
parsing the instruction message, and receiving, by the vehicle-mounted control system, a parameter format corresponding to the parsed instruction message;
determining, according to the parameter format, a controlled component of the vehicle corresponding to the parameter format based on a preset reference database correlating parameter formats and controlled components;
controlling, by the vehicle-mounted control system, the controlled component to execute the vehicle control instruction.

As described above, in the embodiments of the present invention, different instruction blocks correspond to different controlled components of the vehicle, and this correspondence relationship is preset by manufacturers. The user may further modify this correspondence relationship in subsequent configurations. Since the vehicle control instruction contains extensive information, it's necessary to sparse the vehicle control instruction to achieve precise vehicle control. The present embodiment provides a parsing method which firstly, extracts, by the vehicle terminal, the instruction message from the vehicle control instruction; certainly, during the extraction process, the preset extraction protocol should be followed to ensure the accuracy of data extraction; next, parses the extracted instruction message, receives the parameter format corresponding to the parsed instruction message; then, receives the preset reference database correlating parameter formats and controlled components, this database may be built in by manufacturers or be defined by the user; and details are not described herein; then obtains the controlled component of the vehicle corresponding to the parameter format by performing a one-to-one comparison in the reference database; finally, sends the vehicle control instruction to the corresponding controlled component (or hardware device) to make it execute the corresponding vehicle control instruction. In addition, considering that different vehicle models have different design requirements, solving the problem of how to accurately issue the vehicle control instruction to the corresponding controlled component of the vehicle to make it accurately execute the corresponding function requires different processing strategies based on the actual circumstances. Details are not described herein.

Preferably, in the embodiments of the present invention, each instruction block has built-in relevant time information, space information, etc. as essential dimension properties. For example, in building-block-style instructions, the relevant time information refers to specific time points, and relevant space information corresponds on a one-to-one basis with the controlled components distributed at different locations in the vehicle. Based on this consideration, the embodiments of the present invention use the dimension information as judgment basis to process the case where a plurality of instruction blocks coexist, ensuring that the processing of each instruction block does not interfere with others.

In the above embodiment, the number of the user-selected instruction blocks and the number of the vehicle control instructions are equal in quantity and are both at least two, then after the process of interpreting, by the vehicle-mounted control system, the instruction set to obtain a corresponding vehicle control instruction, the method further includes:
extracting separately respective execution dimension parameters corresponding to each user-selected instruction block;
constructing an execution dimension axis corresponding to the respective execution dimension parameters;
sending the vehicle control instructions to each controlled component of the vehicle one by one to make each controlled component of the vehicle execute the vehicle control instructions in a proper order based on the execution dimensional axis.

Furthermore, in the embodiments of the present invention, the execution dimension parameter includes at least one of the following: a time dimension parameter and a space dimension parameter, and the execution dimension axis includes at least one of the following: an execution time dimension axis and an execution space dimension axis.

As described above, since the essential dimension properties of the instruction block include a plurality of dimensions such as time dimension and space dimension, different dimension parameter information needs to be taken into consideration in practical applications. In an example, regarding time dimension parameters, they are used to construct the execution time dimension axis. The user-selected instruction block includes an instruction block 1, an instruction block 2, and an instruction block 3 wherein a control object of the instruction block 1 is vehicle door, more specifically, "open the left top wing door" is selected, a control object of the instruction block 2 is vehicle light, more specifically, "turn on the left front vehicle light" is selected, a control object of the instruction block 3 is seat, more specifically, "move the left back seat 5cm backward" is selected. The embodiment of the present invention firstly extracts respective time point parameters corresponding to each instruction block, for example, an execution moment of the instruction block 1 is 5s, an execution moment of the instruction block 2 is 0s, an execution moment of the instruction block 3 is 3s, sorts them in order, then constructs the execution time dimension axis according to the order; then, concatenates the instruction block 1, instruction block 2, and instruction block 3 and converts the concatenated instructions into a vehicle control instruction, that is, for the vehicle-mounted terminal, its internal software module will receive a complete vehicle control instruction which includes a code fragment 2 corresponding to turning on the left front light when the execution moment is at 0s, a code fragment 3 corresponding to moving the left back seat backward 5 cm when the execution moment is at 3s, and a code fragment 1 corresponding to opening the left top wing door when the execution moment is at 5s; and then, according to the system's built-in clock, transmits the above vehicle control instructions respectively into the relevant control mechanisms of the left front light, left back seat, and left top wing door, thereby accurately implementing effective control of a plurality of instruction blocks on the vehicle.

In another example, regarding space dimension parameters, they may include specific directions such as north, south, east, west, up, down, left, right, as well as information representing orientation, such as altitude, horizon, high and low air pressure, latitude, and longitude, and the like, they are used to construct the execution space dimension axis. The user-selected instruction block includes an instruction block 4, an instruction block 5 and an instruction block 6 (other instruction blocks are not described herein), wherein, an object controlled by the instruction block 4 is a front passenger seat, an object controlled by the instruction block 5 is a front passenger armrest, an object controlled by the instruction block 6 is a front passenger vehicle window sunshade. The embodiment of the present invention first extracts respective space dimension parameters corresponding to each instruction block. In an example, the space physical coordinates of the instruction block 4, instruction block 5, and instruction block 6 all correspond to the front passenger seat area of the vehicle. When the trigger condition of the instruction blocks is met (the trigger condition of the instruction blocks may be user-defined, and the restriction of trigger condition may also be canceled), for example, when the vehicle is in an uphill driving state, the relevant instruction blocks (i.e., the instruction blocks 4, instruction block 5, and instruction block 6) are called for execution, and are converted into corresponding vehicle control instructions. Then the front passenger seat is adjusted accordingly to be raised forward to a certain angle. This adjustment is based on the fact that the human spine and the field of vision will change correspondingly in the uphill condition, so adjusting the seat angle is beneficial for providing a comfortable seating experience. Additionally, the structure of the front passenger armrest is adjusted to a structure that aligns with the stress comfort level of human body under the changed spine. At the meantime, the front passenger vehicle window sunshade is adjusted accordingly to extend, preventing sunlight from affecting the seating experience in the uphill condition (certainly, the control of the sunshade is only applicable to those vehicle models equipped with sunshades; for certain high-end models, the content of instruction block 6 may be replaced with adjusting accordingly the light transmittance of the vehicle window in front of the front passenger seat or other parameters). Certainly, the examples related to the space dimension parameters are based on the processing of the instructions used for controlling a specific area within the vehicle. Relevant space dimensions may also be approached in a way of non-specific area set, that is, the controlled components of the vehicle corresponding to relevant instructions are distributed at various locations in the vehicle. In an example, when the vehicle enters a high-altitude area, an instruction block for controlling the on/off of air conditioning, an instruction block for controlling the temperature, an instruction block for controlling the air filtration, and an instruction block for controlling the on/off of high-precision navigation, and the like are called for execution. By constructing the execution dimension axis, the relevant instructions are converted into vehicle control instructions, and then the vehicle's corresponding functions are controlled to operate in a proper order under specific circumstances. From the above, it can be seen that the instruction blocks control the controlled component installed in the vehicle, making the control of vehicle more flexible, thus advancing the intelligent level of vehicle control.

Certainly, in addition to processing the instruction blocks with respect to time dimension and space dimension, the present invention may also employ the information of other dimensions, such as instruction quality dimension, relevance dimension, matching dimension, and so on. The determination of the relevant execution dimension parameters should be based on a comprehensive consideration of factors such as the actual vehicle model, properties of instruction block, and software design requirements, and so on. Details are not described herein. Furthermore, during the processing of instruction blocks, the execution dimension axis is not necessarily isolated single. A plurality of different execution dimension axes may be interleaved and executed in a predetermined order.

Furthermore, in the above embodiments, the process of constructing an execution dimension axis corresponding the respective execution dimension parameters, specifically includes:
receiving time point parameters corresponding to each execution dimension parameter;
determining respective execution timings corresponding to each time point parameter;
constructing the execution time dimension axis based on a chronological sequence of each execution timing.

Furthermore, the process of constructing an execution dimension axis corresponding to the respective execution dimension parameters, further specifically includes:
receiving spatial position parameters corresponding to each execution dimension parameter;
determining respective physical coordinates corresponding to each spatial position parameter;
constructing the execution space dimension axis based on spatial structures of each physical coordinate.

In the above embodiments, the process of concatenating each instruction block, specifically includes:
extracting respective concatenation parameters corresponding to each instruction block;
concatenating each instruction block one by one based on a sequential combination order of the respective concatenation parameters.

During the process of converting instruction blocks into vehicle-recognizable vehicle control instructions, the coexistence of the plurality of instruction blocks may result in mutual influence. Thus, it is necessary to concatenate the plurality of instruction blocks. During the concatenation process, to ensure the originality of the data, it is necessary to extract concatenation parameters of each instruction block individually and then concatenate each instruction block carefully according to the properties of the concatenation parameters. Preferably, in the present embodiment, the concatenation parameters are reflected in the sequential combination order. By following the requirements of the above-mentioned order, the complete concatenated instruction blocks can be obtained. Certainly, the actual properties of the concatenation parameters need to consider different data types and design requirements, which are not further elaborated here.

Preferably, in the present embodiment, the process of converting the instruction blocks into vehicle control instructions includes:
converting each concatenated instruction block based on a preset first conversion relationship to obtain the converted vehicle control instructions, wherein the preset first conversion relationship includes:
translating each concatenated instruction block based on a preset translation protocol to obtain the corresponding instruction set;
interpreting the instruction set according to an interpretation protocol of the vehicle to obtain the corresponding vehicle control instructions.

For the first conversion relationship, its purpose is to convert the concatenated instruction blocks into vehicle control instructions that is recognizable to the vehicle. Preferably, the present embodiment uses a first-translate-then-interpret approach to process the instruction blocks. Regarding the translation process, it is based on a preset translation protocol. The preset translation protocol is typically related to the instruction block's data type and requires comprehensive consideration of the specific processor type of the vehicle terminal. Later, the user may further change the translation protocol based on different requirements. Regarding the interpretation process, it is based on a built-in interpretation protocol of the vehicle terminal and it is necessary to convert the data into the vehicle control signals that are recognizable to the vehicle terminal, therefore it also requires comprehensive consideration of the specific processor type of the vehicle terminal. Later, the user may further change the translation protocol based on different requirements.

Furthermore, during the process of translation and interpretation, in related protocols, the correspondence relationship between the data types of the instruction blocks and others may be a one-to-one correspondent protocol conversion relationship that is selected based on a built-in data processing framework. Alternatively, a particular protocol type or data processing framework that is of non one-to-one correspondence relationship may also be chosen according to actual conversion requirements. Details are not described herein.

Furthermore, to ensure the integrity and accuracy of the data, after the process of translating each concatenated instruction block based on a preset translation protocol to obtain the corresponding instruction set, the method further includes:
sending the instruction set to a TSP server for the TSP server to verify a content of the instruction set, wherein the content of the instruction set includes at least an instruction set protocol and an instruction set permission.

The TSP server utilizes big data technology and a built-in verification mechanism to verify the instruction set, so as to ensure that during processing and converting the user-selected instruction block, the content of the instruction block will not be tampered with, guaranteeing the accuracy and effectiveness of the content of the instruction block. Certainly, to achieve this effect, the converted instruction set protocol and instruction set permission need to be verified. The verification principles may refer to existing technology. For example, the TSP server calculates the addresses of the instructions in all code segments of the instruction set and then converts the addresses of the instructions into address verification data based on a conversion protocol corresponding to the instruction set. The server receives the target address data for each code segment through an built-in database or big data technology, and compares and analyzes the target address data with the converted address verification data to obtain the corresponding verification results. The verification process for the instruction set permission may also refer to the above process. This shows that by having the TSP server verify the instruction set, the accuracy and effectiveness of the data of instruction set can be guaranteed and abnormal or faulty instruction sets can be promptly detected, thereby guaranteeing the effectiveness of the subsequent vehicle control instructions.

Another embodiment of the present invention provides an apparatus for processing instruction block, including:
a receiving module 11, configured to receive a user-set trigger condition for translating an instruction block;
a translating module 12, configured to translate a user-selected instruction block into a corresponding instruction set according to an instruction parameter of the selected instruction block when the trigger condition for translating an instruction block is met;
an interpreting module 13, configured to interpret the instruction set to obtain a corresponding vehicle control instruction.

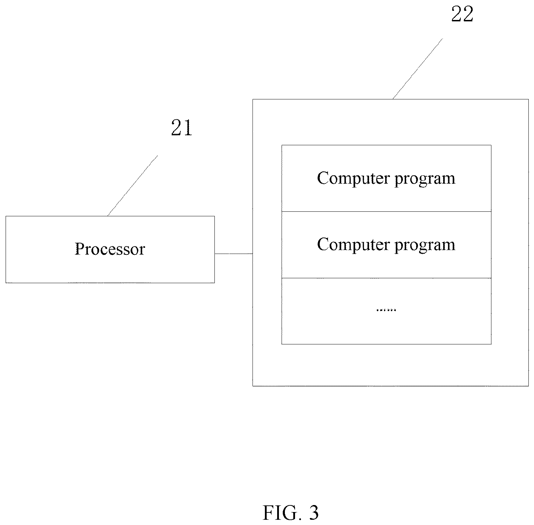

Refer to FIG. 3, which is a block diagram of a structure of a terminal device provided in an embodiment of the present invention. The terminal device 20 provided in the embodiments of the present invention includes a processor 21, a memory 22 and a computer program stored in the memory 22 and configured to be executed by the processor 21; when executing the computer program, the processor 21 implements the steps of the method for processing an instruction block described in the above embodiments, such as the steps S1 to S3 shown in FIG. 1; alternatively, the processor 21 implements the functions of the respective modules described in the above embodiments, such as the receiving module 11.

As an example, the computer program may be divided into one or more modules, the one or more modules are stored in the memory 22 and executed by the processor 21 to achieve the present invention. The one or more modules may be a series of computer program instruction segments capable of performing specific functions, and the instruction segments are configured to describe the execution process of the computer program on the terminal device 20. For example, the computer program may be divided into a receiving module 11, a translating module 12, an interpreting module 13. The functions of each module are as follows:
the receiving module 11 is configured to receive a user-set trigger condition for translating an instruction block;
the translating module 12 is configured to translate a user-selected instruction block into a corresponding instruction set according to an instruction parameter of the selected instruction block when the trigger condition for translating an instruction block is met;
the interpreting module 13 is configured to interpret the instruction set to obtain a corresponding vehicle control instruction.

The terminal device 20 may include, but is not limited to, the processor 21, the memory 22. Those skilled in the art can understand that the schematic diagram is merely an example of the terminal device and does not limit the terminal device 20. More or fewer components than shown in the diagram or a combination of certain components, or different components may be included. For example, the terminal device 20 may also include an input/output device, a network access device, a bus, and so on.

The processor 21 may be a Central Processing Unit (CPU, Central Processing Unit), alternatively it may be another general-purpose processor, a Digital Signal Processor (DSP, Digital Signal Processor), an Application Specific Integrated Circuit (ASIC, Application Specific Integrated Circuit), a Field-Programmable Gate Array (FPGA, Field-Programmable Gate Array), or other programmable logic devices, discrete gates or transistor logic devices, discrete hardware components, and the like. The general-purpose processor may be a microprocessor or the processor may be any conventional processor, and so on. The processor 21 is the control center of the terminal device 20 and connects various parts of the terminal device 20 using various interfaces and lines.

The memory 22 is configured to store the computer program and/or modules. The processor 21 runs or executes the computer program and/or modules stored in the memory 22, and calls data stored in the memory 22 to implement various functions of the terminal device 20. The memory 22 mainly includes a program storage area and a data storage area. The program storage area may store an operating system, an application program required by at least one function (such as a voice play function or an image play function), and the like. The data storage area may store data (such as audio data or an address book) that is created based on use of the mobile phone, and the like. In addition, the memory 22 may include a high-speed random access memory, and may further include a nonvolatile memory, for example, a hard disk, a memory, a plug-in hard drive, a Smart Media Card (SMC, Smart Media Card), a Secure Digital (SD, Secure Digital) card, a flash card, at least one magnetic disk storage device, a flash storage device, or other volatile solid-state storage devices.

If the modules integrated in the terminal device 20 are implemented as software functional units and sold or used as independent products, they may be stored on a computer-readable storage medium. Based on this understanding, all or part of the processes of the methods implemented in the above embodiments of the present invention may also be achieved through computer programs instructing the relevant hardware. The computer program may be stored in a computer-readable storage medium, and when the computer program is executed by the processor, the steps of the various method embodiments described above can be implemented. The computer program includes computer program codes. The computer program codes may be in a form of source code, object code, executable file or in some intermediate forms. The computer-readable medium may include any entity or apparatus capable of carrying the computer program codes, a recording medium, a USB flash drive, a removable hard disk, a magnetic disk, an optical disk, a computer memory, a Read-Only Memory (ROM, Read-Only Memory), a Random Access Memory (RAM, Random Access Memory), an electrical carrier signal, a telecommunication signal, a software distribution medium, and the like.

Those skilled in the art should understand that all or part of the processes of the methods implemented in the above embodiments may be achieved through a computer program instructing the relevant hardware. The program may be stored in a computer-readable storage medium, and when the program is executed, the processes of various method embodiments described above can be implemented. The storage medium may be a disk, a CD, a Read-Only Memory (ROM, Read-Only Memory), or a Random Access Memory (RAM, Random Access Memory), and the like.

Furthermore, the embodiments of the present invention provide a vehicle, the vehicle includes the terminal device as described above.

Correspondingly, the embodiments of the present invention provide a computer-readable storage medium, the computer-readable storage medium includes a stored computer program, wherein when the computer program runs, a device in which the computer-readable storage medium is located is controlled to execute the steps of the method for processing an instruction block of the above embodiments of the present invention, such as the steps S1~S3 shown in FIG. 1.

Compared with the prior art, the beneficial effects of the embodiments of the present invention include at least one of the following points.
(1) No need to rely on a preset single instruction block of the system. Users can autonomously select different instruction blocks based on the actual requirements in different environments, meanwhile, users can also autonomously set relevant trigger conditions for the instruction blocks, enhancing the flexibility and expandability of instruction control, reducing the threshold for user programming control. Then, the sequentially performed operations related to translation and interpretation of the instruction blocks, ensures that the instruction blocks needed by the user are effectively processed and converted into the vehicle control instruction that are recognizable to the vehicle so as to ensure that the vehicle can accurately process them, thereby achieving the corresponding effect of corresponding personalized control. This shows that by configuring a processing strategy for the instruction blocks, the entire process of instruction signal processing from the user to the vehicle is improved, meeting different user instruction requirements, enhancing the user experience, and advancing the intelligence level of vehicle control.
(2) When a plurality of coexisting instruction blocks are set by the user, the execution dimension parameters corresponding to each instruction block are extracted respectively. By using the execution dimension parameters as judgement criteria, the execution dimension axis closely associated with each instruction block can be constructed, so that after the user-set instruction blocks are converted into the vehicle control instructions that are recognizable to the vehicle, the vehicle terminal can effectively process vehicle control instructions based on the execution dimension axis of the instructions, and the corresponding controlled components of the vehicle are controlled to execute the vehicle control instructions in a proper order, preventing disorder in vehicle control. This shows that by configuring a time-axis-based strategy for processing instruction blocks, the vehicle terminal can effectively process each instruction block even when a plurality of instruction blocks are set by the user, thus meeting the user's control requirements under different environmental conditions and guaranteeing the effectiveness of vehicle control.

The above embodiments only represent several implementations of the present invention, their description is specific and detailed, but they should not be understood as limiting the scope of the present invention. It should be noted that for those skilled in the art, various modifications and improvements can be made without departing from the concept of the invention, these modifications and improvements should be included within the scope of the present invention Therefore, the scope of protection of the present invention is defined by the attached claims.

## Claims

1. A method for processing an instruction block, wherein the method comprises:
receiving, by a vehicle-mounted control system, a user-set trigger condition for translating an instruction block;
translating, by the vehicle-mounted control system, a user-selected instruction block into a corresponding instruction set according to an instruction parameter of the selected instruction block if the trigger condition for translating an instruction block is met;
interpreting, by the vehicle-mounted control system, the instruction set to obtain a corresponding vehicle control instruction.

2. The method for processing an instruction block as claimed in claim 1, wherein after the process of translating a user-selected instruction block into a corresponding instruction set according to an instruction parameter of the selected instruction block, the method further comprises:
sending, by the vehicle-mounted control system, the instruction set to a cloud server for the cloud server to verify a content of the instruction set, wherein the content of the instruction set comprises at least an instruction set protocol and an instruction set permission.

3. The method for processing an instruction block as claimed in claim 1, wherein the trigger condition for translating an instruction block is met when
the vehicle-mounted control system receives a trigger signal from a user terminal.

4. The method for processing an instruction block as claimed in claim 1, wherein the process of translating a user-selected instruction block into a corresponding instruction set according to an instruction parameter of the selected instruction block, specifically comprises:
extracting, by the vehicle-mounted control system, individual instructions from the instruction block;
generating, by the vehicle-mounted control system, corresponding code fragments based on the instruction parameters of each individual instruction;
constructing, by the vehicle-mounted control system, the corresponding instruction set by using the code fragments.

5. The method for processing an instruction block as claimed in claim 1, wherein after obtaining the corresponding vehicle control instruction, the method further comprises:
extracting, by the vehicle-mounted control system, an instruction message from the vehicle control instruction;
parsing the instruction message, and receiving, by the vehicle-mounted control system, a parameter format corresponding to the parsed instruction message;
determining, according to the parameter format, a controlled component of the vehicle corresponding to the parameter format based on a preset reference database correlating parameter formats and controlled components;
controlling, by the vehicle-mounted control system, the controlled component to execute the vehicle control instruction.

6. The method for processing an instruction block as claimed in claim 1, wherein the number of the user-selected instruction blocks and the number of the vehicle control instructions are equal in quantity and are both at least two, then after the process of interpreting, by the vehicle-mounted control system, the instruction set to obtain a corresponding vehicle control instruction, the method further comprises:
extracting separately respective execution dimension parameters corresponding to each user-selected instruction block;
constructing an execution dimension axis corresponding to the respective execution dimension parameters;
sending the vehicle control instructions to each controlled component of the vehicle one by one to make each controlled component of the vehicle execute the vehicle control instructions in a proper order based on the execution dimensional axis.

7. The method for processing an instruction block as claimed in claim 6, wherein the execution dimension parameter comprises at least one of the following: a time dimension parameter and a space dimension parameter;
the execution dimension axis comprises at least one of the following: an execution time dimension axis and an execution space dimension axis.

8. The method for processing an instruction block as claimed in claim 7, wherein the process of constructing an execution dimension axis corresponding to the respective execution dimension parameters, specifically comprises:
receiving time point parameters corresponding to each execution dimension parameter;
determining respective execution timings corresponding to each time point parameter;
constructing the execution time dimension axis based on a chronological sequence of each execution timing.

9. The method for processing an instruction block as claimed in claim 7, wherein the process of constructing an execution dimension axis corresponding to the respective execution dimension parameters, specifically comprises:
receiving spatial position parameters corresponding to each execution dimension parameter;
determining respective physical coordinates corresponding to each spatial position parameter;
constructing the execution space dimension axis based on spatial structures of each physical coordinate.

10. The method for processing an instruction block as claimed in claim 6, wherein the process of concatenating each instruction block, specifically comprises:
extracting respective concatenation parameters corresponding to each instruction block;
concatenating each instruction block one by one based on a sequential combination order of the respective concatenation parameters.

11. The method for processing an instruction block as claimed in claim 6, wherein the process of converting each concatenated instruction block into corresponding vehicle control instructions, specifically comprises:
converting each concatenated instruction block based on a preset first conversion relationship to obtain converted vehicle control instructions, wherein the preset first conversion relationship comprises:
translating each concatenated instruction block based on a preset translation protocol to obtain the corresponding instruction set;
interpreting the instruction set according to an interpretation protocol of the vehicle to obtain the corresponding vehicle control instructions.

12. The method for processing an instruction block as claimed in claim 11, wherein after the process of translating each concatenated instruction block based on a preset translation protocol to obtain the corresponding instruction set, the method further comprises:
sending the instruction set to a TSP server for the TSP server to verify a content of the instruction set, wherein the content of the instruction set comprises at least an instruction set protocol and an instruction set permission.

13. An apparatus for processing an instruction block, wherein the apparatus comprises:
a receiving module, configured to receive a user-set trigger condition for translating an instruction block;
a translating module, configured to translate a user-selected instruction block into a corresponding instruction set according to an instruction parameter of the selected instruction block when the trigger condition for translating an instruction block is met;
an interpreting module, configured to interpret the instruction set to obtain a corresponding vehicle control instruction.

14. A terminal device, comprising a memory, a processor, and a computer program stored in the memory and executable on the processor; wherein when executing the computer program, the processor implements the method for processing an instruction block as claimed in any one of claims 1-12.

15. A vehicle, wherein the vehicle comprises the terminal device as claimed in claim 14.

16. A computer-readable storage medium, wherein the computer-readable storage medium stores a computer program, wherein when the computer program runs, a device in which the computer-readable storage medium is located is controlled to perform the method for processing an instruction block as claimed in any one of claims 1-12.
